Europäisches Patentamt

European Patent Office

Office européen des brevets

(19)

(11) **EP 1 125 631 A2**

(12) ## EUROPEAN PATENT APPLICATION

(43) Date of publication:
**22.08.2001 Bulletin 2001/34**

(51) Int Cl.[7]: **B01J 20/20**, B01J 20/28, B01J 20/32

(21) Application number: **00310534.3**

(22) Date of filing: **28.11.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **14.02.2000 JP 2000035524**

(71) Applicants:
- **Isuzu Ceramics Research Institute Co., Ltd.**
  **Fujisawa-shi, Kanagawa 252-0801 (JP)**
- **Ship & Ocean Foundation**
  **Tokyo 105-0001 (JP)**

(72) Inventors:
- **Ishida, Akira**
  **Fujisawa-shi, Kanagawa 252-0815 (JP)**
- **Ohsumi, Kazuo**
  **Fujisawa-shi, Kanagawa 251-0025 (JP)**
- **Hyuga, Hideki**
  **Kasugai-shi, Aichi 486-0833 (JP)**

(74) Representative: **Bannerman, David Gardner et al**
**Withers & Rogers,**
**Goldings House,**
**2 Hays Lane**
**London SE1 2HW (GB)**

(54) **CO2 adsorbent**

(57) A $CO_2$ adsorbent that enhances the $CO_2$ recovery rate in the $CO_2$ separation and recovery process is provided. The $CO_2$ adsorbent is made of active carbon and/or molecular sieve carbon with a large specific surface area. The active carbon and/or molecular sieve carbon has micropores and/or mesopores 200 Å or less in size and penetrating pores formed by the micropores and/or mesopores connecting with one another. All or part of surfaces of inner passages through which a gas flows and of terminal pores are covered directly with a polar liquid or polar solid without a reaction layer there between.

EP 1 125 631 A2

**Description**

BACKGROUND OF THE INVENTION

The present invention relates to a $CO_2$ adsorbent used to separate and recover $CO_2$.

Attempts have been made in recent years to separate and recover $CO_2$ from exhaust emissions. Separation and recovery of $CO_2$ normally involves having a porous structure with a large specific surface area, such as active carbon, adsorb a gas to be recovered, such as $CO_2$, reducing a pressure a predetermined time later to selectively desorb $CO_2$, and repeating this process to extract and recover $CO_2$.

Among the methods for separating $CO_2$ are an adsorption method (Japanese Patent Laid-Open Nos. 5-116915, 6-99015, 7-80246, 7-277718 and 8-239206), a membrane separation method (Japanese Patent Laid-Open No. 9-70521) and a chemical reaction separation method (Japanese Patent Laid-Open No. 8-257355). These methods, however, require large amounts of energy for separating $CO_2$, have low recoveries, and slow separation speeds.

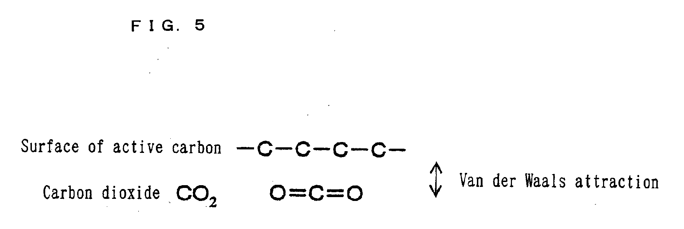

For example, when an unprocessed active carbon is used, $CO_2$ is only adsorbed to the surface of the active carbon by the van der Waals attraction, as shown in Fig. 5. Its adsorptive attraction is not large and there are not many active points, so the amount of $CO_2$ adsorbed is not large.

When zeolite is used, its surface polarity is not large. The adsorptive attraction therefore is not sufficiently large and the adsorbed amount is not large.

The present invention has been accomplished to overcome these problems experienced with the conventional technologies and to provide a $CO_2$ adsorbent which can separate and recover $CO_2$ with a high recovery rate.

SUMMARY OF THE INVENTION

As a means for effectively solving the above problems, the present invention provides a $CO_2$ adsorbent having a porous structure with a large specific surface area.

According to one aspect of the present invention, there is provided a $CO_2$ adsorbent having a porous structure, the porous structure comprising: micropores and/or mesopores and penetrating pores formed by the micropores and/ or mesopores connecting with one another; wherein all or part of surfaces of inner passages through which a gas flows and of terminal pores are covered directly with a polar liquid without a reaction layer there between.

According to another aspect of the invention, there is provided a $CO_2$ adsorbent having a porous structure, the porous structure comprising: micropores and/or mesopores and penetrating pores formed by the micropores and/ or mesopores connecting with one another; wherein all or part of surfaces of inner passages through which a gas flows and of terminal pores are covered directly with a polar solid without a reaction layer there between.

According to still another aspect of the invention, there is provided a $CO_2$ adsorbent having a porous structure in which the polar liquid uses phosphoric acid ($H_3PO_4$) and contains 10-30% by weight of phosphoric acid.

According to a further aspect of the invention, there is provided a $CO_2$ adsorbent having a porous structure in which the polar liquid uses phosphoric acid, sulfuric acid, a mixed liquid of phosphoric acid and sulfuric acid, or a water solution of 50% or more of the mixed liquid.

According to a further aspect of the invention, there is provided a $CO_2$ adsorbent having a porous structure in which the polar solid uses a salt, such as phosphate, sulfate, nitrate and halide, or a mixture or composite of these salts.

According to a further aspect of the invention, there is provided a $CO_2$ adsorbent having a porous structure in which the porous structure uses active carbon and/or molecular sieve carbon, and in which the surfaces of inner passages through which a gas flows and of terminal pores are covered with a polar liquid layer which has a thickness smaller than one-half the radius of a circle having an area identical to the cross sectional area of the corresponding inner passage or terminal pore, or the walls of the penetrating pores are covered with a polar liquid layer which has a thickness of 10 Å or more.

According to a further aspect of the invention, there is provided a $CO_2$ adsorbent having a porous structure in which the porous structure uses active carbon and/or molecular sieve carbon, and in which the surfaces of inner passages through which a gas flows and of terminal pores are covered with a polar solid layer of fine particles smaller in grain diameter than one-half the radius of a circle having an area identical to the cross sectional area of the corresponding inner passage or terminal pore, or the walls of the penetrating pores are covered with a polar solid layer of fine particles which has a thickness of 10 Å or more.

BRIEF DESCRIPTION OF THE DRAWINGS

Fig. 1 is an enlarged cross section showing an inner construction of the $CO_2$ adsorbent of an embodiment in which a polar liquid layer is formed over the surface of micropores and mesopores.

Fig. 2 is an enlarged cross section showing an inner construction of the $CO_2$ adsorbent of the above embodiment in which a polar solid layer is formed over the surface of micropores and mesopores.

Fig. 3 is an explanatory diagram showing an electrostatic attraction acting between phosphoric acid of the $CO_2$ adsorbent and carbon dioxide in the above embodiment.

Fig. 4 is a schematic diagram showing a $CO_2$ recovery device as one embodiment of the invention.

Fig. 5 is an explanatory diagram showing the van der Waals attraction acting between active carbon of a conventional $CO_2$ adsorbent and carbon dioxide.

DETAILED DESCRIPTION OF PREFERRED EMBODIMENTS

Now, embodiments of the invention will be described in detail. It should be noted, however, that the following description is only by way of example for better understanding of the essence of the invention, and is not intended to limit the invention unless otherwise specified.

The porous structure of this embodiment has minute pores distributed almost evenly throughout the entire structure, with the pores connecting with each other to form penetrating pores.

The pores in porous structures such as active carbon and CMS (molecular sieve carbon) generally include micropores (20 Å or less), mesopores (20-1000 Å) and macropores (1000 Å or more). The porous structure in the embodiment has micro-pores and meso-pores, which combine to form penetrating pores through which a gas can pass. These penetrating pores are preferably 200 Å in effective diameter.

A polar liquid or polar solid that generates an electrostatic attraction is added to the porous structure. By adding the polar liquid or polar solid to the porous structure, the surfaces of even the smallest pores or micropores are wet by the polar liquid or attached with the polar solid. That is, the surfaces of inner passages through which a gas flows and of terminal pores are covered with a polar liquid layer or polar solid layer of fine particles which has a thickness smaller than one-half the radius of a circle having an area identical to the cross sectional area of the corresponding inner passage or terminal pore, or the walls of the penetrating pores are covered with a polar liquid layer or polar solid layer of fine particles which has a thickness of 10 Å or more.

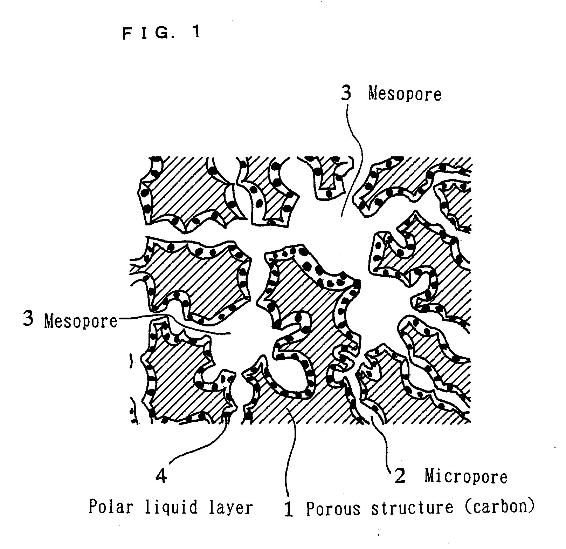

In a state in which the pores of the porous structure are wetted with the polar liquid, all the surfaces of micropores 2 and mesopores 3 formed in the porous structure 1 are covered with the polar liquid layer 4, as shown in Fig. 1.

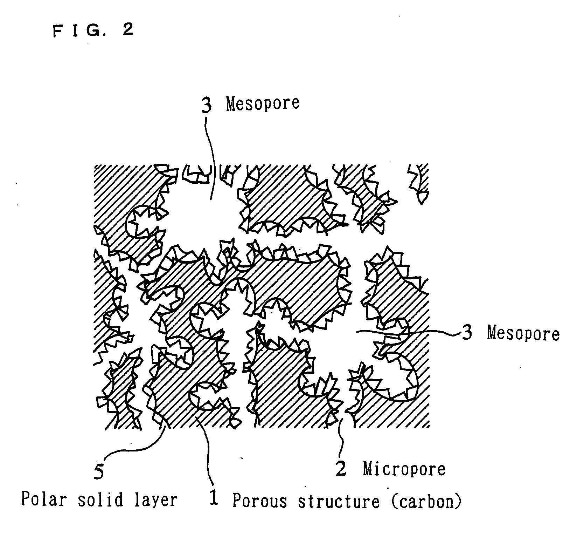

In a state in which the pores of the porous structure are attached with the polar solid, all the surfaces of micropores 2 and mesopores 3 formed in the porous structure 1 are covered with the polar solid layer 5, as shown in Fig. 2.

An example polar liquid includes phosphoric acid, sulfuric acid, their mixed liquid, and water solution containing 50% or more of the mixed liquid.

An example polar solid includes salts such as phosphate, sulfate, nitrate and halides, and a mixture or composite of these salts.

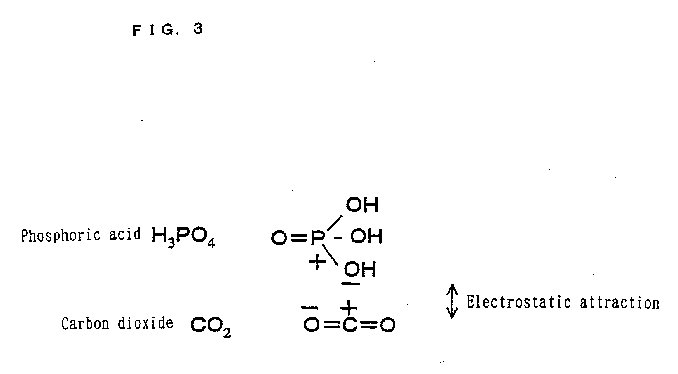

Because electric charges are given to the porous structure 1, such as active carbon and CMS, when a polar liquid or polar solid is added, an electrostatic attraction is generated between the polar liquid or polar solid and $CO_2$, increasing the adsorptive attraction and therefore the amount of gas adsorbed (see Fig. 3).

Because the pores of the porous structure 1, to which the polar liquid or polar solid is added, are wetted with the polar liquid or attached with the polar solid on the surfaces of even the smallest micropores 2, the repetition of the adsorption and desorption of $CO_2$ to and from the porous structure 1 can recover $CO_2$ with a high recovery rate.

Now, embodiments of this invention will be described in more detail.

[Embodiment 1]

The $CO_2$ adsorbent according to the embodiment 1 uses active carbon as the porous structure and phosphoric acid as the polar liquid.

When $CO_2$ is introduced into the active carbon to which phosphoric acid was added, $CO_2$ and phosphoric acid ($H_3PO_4$) contact each other, as shown in Fig. 3.

At this time, P of a P-O bond in the phosphoric acid is given a positive charge and O a negative charge. C of C=O bond in $CO_2$ has a positive charge and O a negative charge. So, an electrostatic attraction is generated between the positive and negative charges in the phosphoric acid and those in the $CO_2$, thus increasing the adsorptive attraction and the amount of $CO_2$ adsorbed and enhancing the recovery rate of $CO_2$.

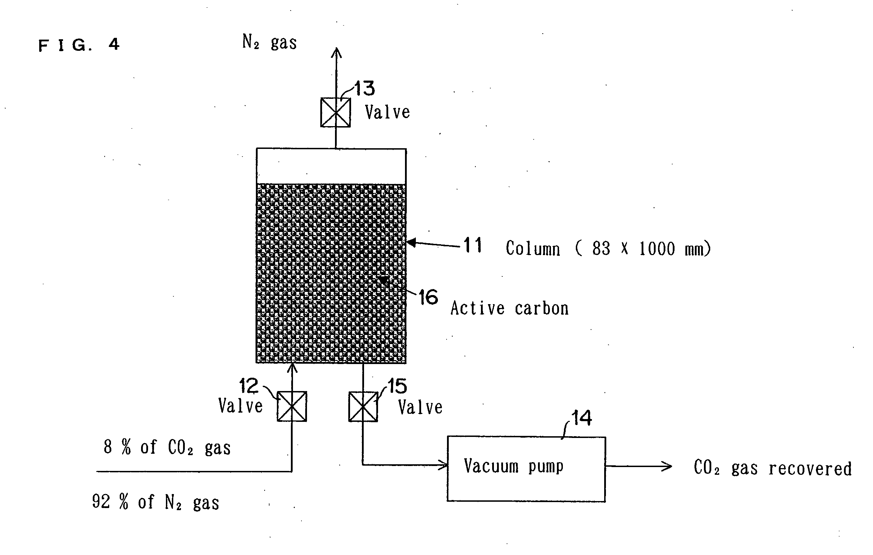

A $CO_2$ recovery device has, as shown in Fig. 4, an inlet valve 12 installed at one end of a column 11 which measures 83 mm in diameter and 1,000 mm in length, and an outlet valve 13 installed at the other end. A cutoff valve 15 for closing the line to a vacuum pump 14 that depressurizes the interior of the column is provided at the same end of the column where the inlet valve 12 is installed. The active carbon 16 to which phosphoric acid was added is filled into the column 11 as the $CO_2$ adsorbent in a predetermined amount.

Into the column 11 which is filled with the phosphoric acid-added active carbon 16 is flowed a mixed gas of 8% $CO_2$ and 92% $N_2$ at 1 NL/min (normal liter/minute).

Adsorption is carried out for 10 minutes at 196 kPa, after which the vacuum pump 14 is operated to depressurize the column 11 to desorb the $CO_2$ from the active carbon 16 to recover the $CO_2$. The evaluation of the recovered $CO_2$ is performed at 0.98 kPa. The recovery rate is calculated using the following formula.

$$\text{Recovery rate (\%)} = \{(\text{amount of recovered gas}) \times (CO_2 \text{ concentration \%})\} / \text{amount of introduced } CO_2$$

The results for various amounts of phosphoric acid added are shown in Table 1 along with the results when sulfuric acid is added.

Table 1

| $CO_2$ recovery rate (%) of adsorbent with phosphoric acid added (along with recovery rate when sulfuric acid is added) ($CO_2$ recovery rate of adsorbent with no polar liquid is 38%) | | | | |
|---|---|---|---|---|
| Amount of polar liquid | | 10% | 20% | 30% |
| Polar liquid | Phosphoric acid | 56 | 63 | 59 |
| | Sulfuric acid | 50 | 59 | 55 |

As shown in Table 1, the $CO_2$ recovery rate is 56% for the adsorbent with 10% of phosphoric acid, 63% for the adsorbent with 20% of phosphoric acid, and 59% for the adsorbent with 30% of phosphoric acid. These rates are 47% to 66% higher than the $CO_2$ recovery rate when the adsorbent with no phosphoric acid is used. For the adsorbent with sulfuric acid, the $CO_2$ recovery rate is 50% when 10% of sulfuric acid is added, 59% when 20% of sulfuric acid is added, and 55% when 30% of sulfuric acid is added. The addition of sulfuric acid has increased the $CO_2$ recovery rate by 32% to 55% from that of the adsorbent with no sulfuric acid.

Table 2 shows the $CO_2$ recovery rate as the size (range) of the pores and the amount of phosphoric acid added (%) are changed.

Table 2

| $CO_2$ recovery rate (%) of adsorbent with phosphoric acid added | | | | |
|---|---|---|---|---|
| Size of pores | 100Å or less | 150Å or less | 200Å or less | 300Å or less |
| 10% phosphoric acid added | 25 | 48 | 56 | 36 |
| 20% phosphoric acid added | 32 | 56 | 63 | 46 |

As shown in Table 2, the $CO_2$ recovery rate is 25% for the pore size of 100 Å or less when 10% of phosphoric acid is added to the adsorbent; 48% for 100-150 Å; 56% for 150-200 Å; and 56% for 200-300 Å. When 20% of phosphoric acid is added to the adsorbent, the $CO_2$ recovery rate is 32% for the pore size of 100 Å or less; 56% for 100-150 Å; 63% for 150-200 Å; and 46% for 200-300 Å. The maximum recovery rate exists in the pore size range of 100-200 Å.

[Embodiment 2]

Tests were made similar to those of the embodiment 1, except that the polar liquid includes 50% or more of a mixed water solution of phosphoric acid and sulfuric acid. The results are shown in Table 3.

Table 3

| $CO_2$ recovery rate (%) of adsorbent | | | | |
|---|---|---|---|---|
| Amount of polar liquid | | 10% | 20% | 30% |
| Mixture of polar liquid | 20% phosphoric acid and 35% sulfuric acid | 46 | 50 | 48 |
| | 35% phosphoric acid and 20% sulfuric acid | 43 | 48 | 47 |

As shown in Table 3, the $CO_2$ recovery rate when using the water solution of 20% phosphoric acid and 35% sulfuric acid is improved 21-32% over that obtained by the adhesive with no polar liquid. When the water solution of 35% phosphoric acid and 20% sulfuric acid is used, the $CO_2$ recovery rate is improved by 13-26%.

[Embodiment 3]

In this case, tests were conducted in ways similar to the embodiment 1, except that the adsorbent uses phosphate ($NaPo_3$), sulfate ($Na_2SO_4$), nitrate ($NaNO_3$) or halide salts (KF, KBr) as the polar solid. The results are shown in Table 4.

Table 4

| CO$_2$ recovery rate (%) of adsorbent | | 10% | 20% | 30% |
|---|---|---|---|---|
| Amount of polar solid added | | 10% | 20% | 30% |
| Polar solid | NaPO$_3$ (phosphate) | 52 | 58 | 57 |
| | Na$_2$SO$_4$ (sulfate) | 50 | 55 | 54 |
| | NaNO$_3$ (nitrate) | 48 | 52 | 51 |
| | KF (halide) | 47 | 50 | 51 |
| | KBr (halide) | 45 | 49 | 50 |

As shown in Table 4, compared with the adsorbent with no polar liquid, the adsorbent with phosphate increased the $CO_2$ recovery rate by 37-53%, the adsorbent with sulfate increased the $CO_2$ recovery rate by 32-45%, the adsorbent with nitrate improved the $CO_2$ recovery rate by 26-37%, the adsorbent with KF (halide salt) improved $CO_2$ recovery rate by 24-34%, and the adsorbent with KBr (halide salt) improved the $CO_2$ recovery rate by 18-32%.

[Embodiment 4]

In this embodiment, CMS is used as the porous structure and phosphoric acid or sulfuric acid is added to the $CO_2$ adsorbent. In other respects, the tests were conducted in the similar manner to that of the embodiment 1. The results are shown in Table 5.

Table 5

| CO$_2$ recovery rate (%) of adsorbent | | 10% | 20% | 30% |
|---|---|---|---|---|
| Amount of polar liquid | | 10% | 20% | 30% |
| Polar liquid | Phosphoric acid | 58 | 63 | 57 |
| | Sulfuric acid | 53 | 59 | 53 |

As shown in Table 5, when phosphoric acid is added to the adsorbent, the $CO_2$ recovery rate is 58% for the adsorbent with 10% phosphoric acid, 63% for the adsorbent with 20% phosphoric acid, and 57% for the adsorbent with 30% phosphoric acid. When sulfuric acid is added to the adsorbent, the $CO_2$ recovery rate is 53% for the adsorbent with 10% sulfuric acid, 59 for the adsorbent with 20% sulfuric acid, and 53% for the adsorbent with 30% sulfuric acid.

As a result, the use of CMS, when a polar liquid was added, produced almost the same $CO_2$ recovery rate as obtained with active carbon.

As described above, according to claim 1 of the invention, the $CO_2$ adsorbent has a porous structure with a large specific surface area, the porous structure comprising: micropores and/or mesopores and penetrating pores formed by the micropores and/or mesopores connecting with one another; wherein all or part of surfaces of inner passages through which a gas flows and of terminal pores are covered directly with a polar liquid without a reaction layer there between. With this $CO_2$ adsorbent, the polar liquid covering the surfaces of the pores in the porous pore structure adsorbs a greater amount of $CO_2$ than can be adsorbed by conventional techniques, thus enhancing the $CO_2$ recovery rate.

According to claim 2 of the invention, the $CO_2$ adsorbent has a porous structure with a large specific surface area, the porous structure comprising: micropores and/or mesopores and penetrating pores formed by the micropores and/or mesopores connecting with one another; wherein all or part of surfaces of inner passages through which a gas flows and of terminal pores are covered directly with a polar solid without a reaction layer there between. With this $CO_2$

adsorbent, the polar solid covering the surfaces of the pores in the porous pore structure adsorbs a greater amount of $CO_2$ than can be adsorbed by conventional techniques, thus enhancing the $CO_2$ recovery rate.

According to claim 3 of the invention, the polar liquid uses phosphoric acid and contains 10-30% by weight of phosphoric acid. This $CO_2$ adsorbent can realize a high $CO_2$ recovery rate of 55% or more.

According to claim 4 of the invention, the polar liquid uses phosphoric acid, sulfuric acid, a mixed liquid of phosphoric acid and sulfuric acid, or a water solution of 50% or more of the mixed liquid. This $CO_2$ adsorbent can have the surfaces of even micropores covered with the polar liquid layer, increasing the $CO_2$ adsorbing attraction.

According to claim 5 of the invention, the polar solid uses a salt, such as phosphate, sulfate, nitrate and halide, or a mixture or composite of these salts. This $CO_2$ adsorbent can have the surfaces of even micropores covered with the polar solid layer, increasing the $CO_2$ adsorbing attraction.

According to claim 6 of the invention, the porous structure uses active carbon and/or molecular sieve carbon, and the surfaces of inner passages through which a gas flows and of terminal pores are covered with a polar liquid layer which has a thickness smaller than one-half the radius of a circle having an area identical to the cross sectional area of the corresponding inner passage or terminal pore, or the walls of the penetrating pores are covered with a polar liquid layer which has a thickness of 10 Å or more. When active carbon is used, the gas adsorbing surface area is increased, thus enhancing the $CO_2$ recovery rate to 2.5 times that of the conventional porous structure. When molecular sieve carbon is used, the gas adsorbing surface area is further increased, enhancing the $CO_2$ recovery rate to 5 times that of the conventional porous structure.

According to claim 6 of the invention, the porous structure uses active carbon and/or molecular sieve carbon, and the surfaces of inner passages through which a gas flows and of terminal pores are covered with a polar solid layer of fine particles smaller in grain diameter than one-half the radius of a circle having an area identical to the cross sectional area of the corresponding inner passage or terminal pore, or the walls of the penetrating pores are covered with a polar solid layer of fine particles which has a thickness of 10 Å or more. When active carbon is used, the gas adsorbing surface area is increased, thus enhancing the $CO_2$ recovery rate to 2 times that of the conventional porous structure. When molecular sieve carbon is used, the gas adsorbing surface area is further increased, enhancing the $CO_2$ recovery rate to 4 times that of the conventional porous structure.

**Claims**

1. A $CO_2$ adsorbent having a porous structure, the porous structure comprising:

   micropores and/or mesopores and penetrating pores formed by the micropores and/or mesopores connecting with one another;
   wherein all or part of surfaces of inner passages through which a gas flows and of terminal pores are covered directly with a polar liquid without a reaction layer therebetween.

2. A $CO_2$ adsorbent having a porous structure, the porous structure comprising:

   micropores and/or mesopores and penetrating pores formed by the micropores and/or mesopores connecting with one another;
   wherein all or part of surfaces of inner passages through which a gas flows and of terminal pores are covered directly with a polar solid without a reaction layer there between.

3. A $CO_2$ adsorbent according to claim 1, wherein the polar liquid comprises phosphoric acid and contains 10-30% by weight of phosphoric acid.

4. A $CO_2$ adsorbent according to claim 1, wherein the polar liquid comprises phosphoric acid, sulfuric acid, a mixed liquid of phosphoric acid and sulfuric acid, or a water solution of 50% or more of the mixed liquid.

5. A $CO_2$ adsorbent according to claim 2, wherein the polar solid comprises a salt, such as phosphate, sulfate, nitrate and halide, or a mixture or composite of these salts.

6. A $CO_2$ adsorbent according to any one of claim 1, 3 and 4, wherein the porous structure comprises active carbon and/or molecular sieve carbon, and wherein the surfaces of inner passages through which a gas flows and of terminal pores are covered with a polar liquid layer which has a thickness smaller than one-half the radius of a circle having an area identical to the cross sectional area of the corresponding inner passage or terminal pore, or the walls of the penetrating pores are covered with a polar liquid layer which has a thickness of 10 Å or more.

7. A $CO_2$ adsorbent according to claim 2 or 5, wherein the porous structure comprises active carbon and/or molecular sieve carbon, and wherein the surfaces of inner passages through which a gas flows and of terminal pores are covered with a polar solid layer of fine particles smaller in particle diameter than one-half the radius of a circle having an area identical to the cross sectional area of the corresponding inner passage or terminal pore, or the walls of the penetrating pores are covered with a polar solid layer of fine particles which has a thickness of 10 Å or more.

F I G. 1

3 Mesopore

3 Mesopore

4
Polar liquid layer

2 Micropore

1 Porous structure (carbon)

FIG. 2

3 Mesopore

3 Mesopore

5                                      2 Micropore

Polar solid layer    1 Porous structure (carbon)

F I G. 3

Phosphoric acid $H_3PO_4$

$$O=P\overset{\displaystyle OH}{\underset{+\diagdown OH}{-OH}}$$

$$\updownarrow \text{ Electrostatic attraction}$$

Carbon dioxide $CO_2$

$$\overset{-}{O}=\overset{+}{C}=O$$

FIG. 4

N$_2$ gas

13 Valve

11 Column ( 83 x 1000 mm)

16 Active carbon

15 Valve

12 Valve

8 % of CO$_2$ gas

92 % of N$_2$ gas

14 Vacuum pump

CO$_2$ gas recovered

F I G. 5

Surface of active carbon $-C-C-C-C-$

Carbon dioxide $CO_2$ $\qquad$ $O=C=O$ $\qquad\updownarrow$ Van der Waals attraction